# EUROPEAN PATENT APPLICATION

(11) **EP 2 675 243 A1**
(43) Date of publication of application: **18.12.2013**
(21) Application number: 12745263.9
(22) Date of filing: 26.01.2012
(51) Int. Cl.: H05B 6/12

(54) **INDUCTION HEATING COOKER**

(30) Priority: 10.02.2011 JP 2011027650
(71) Applicant: Mitsubishi Electric Corporation, Tokyo 100-8310 (JP); Mitsubishi Electric Home Appliance Co., Ltd., Fukaya-shi, Saitama 369-1295 (JP)
(72) Inventor: SEKINE, Katsunori, Saitama 369-1295 (JP); TANAKA, Michio, Saitama 369-1295 (JP); OOKUBO, Naoya, Saitama 369-1295 (JP)
(74) Representative: Pfenning, Meinig & Partner GbR
(86) International application number: PCT/JP2012/000485
(87) International publication number: WO 2012/108136

(57) **Abstract**

To provide a highly safe induction cooker in which a plurality of differently shaped coils provided on a coil base and each having a concave portion on the outer side thereof, even in case of any deformations in the differently shaped coils.

A main body 1 is provided with induction heating units 3a and 3b that perform induction heating on a heating object. The induction heating units 3a and 3b each include a coil base 33, a main coil 31 that is wound in a disc shape as an integral body on the coil base 33, and a plurality of differently shaped coils 32 provided around the main coil 31 and each having a concave portion in a part of the outer circumference thereof, the concave portion being formed by applying a stress such that the part extends substantially parallel to the outer circumference of the main coil 31. Deformation restraining portions 34 and 35 restrain the concave portions of the differently shaped coils 32 from undergoing deformation with restoring forces.

## Description

### Technical Field

The present invention relates to an induction cooker that cooks by utilizing electromagnetic induction.

### Background Art

Current induction cookers for home use include those of a gas type and those of an electrical type. Electrical induction cookers are roughly classified into those of a heater type and those of an induction heating type. Particularly in recent years, the proportion of induction cookers of an induction heating type has been increased out of consideration for the risk of fire or high heating efficiency. With the increase in the proportion of induction cookers of an induction heating type in an induction cooker market, improvements in cooking performance have been made by utilizing a characteristic that is specific to the electrical type, that is, a capability of fine adjustment.

Particularly, induction cookers are each configured to provide a magnetic flux to a pan, whereby the pan is made to directly generate heat. Therefore, the cooking performance of induction cookers vary significantly with the shapes of coils that produce magnetic fluxes.
Conventional technologies include an induction cooker including a reel unit provided in the body of the induction cooker, and an induction heating coil (see Patent Literature 1, for example). The induction heating coil is obtained as follows. A coil wire (hereinafter also referred to as electric wire) is wound around the reel unit closely on an inner circumferential portion and an outer circumferential portion thereof. A spacer including a plurality of sections is provided into a middle portion of the reel unit, where the coil wire is wound roughly. Thus, the induction heating coil has two separate portions.

In addition, there is a configuration that holds an induction heating coil on a body (see Patent Literature 2, for example). In this configuration, a molded induction heating coil is sandwiched between a bottom portion of a protective frame and a body member such as a coil base.

### Citation List

### Patent Literature

Patent Literature 1: Japanese Patent No. 3172625
Patent Literature 2: Japanese Unexamined Patent Application Publication No. 1-276583

### Summary of Invention

### Technical Problem

The conventional induction cooker disclosed by Patent Literature 1 described above, however, is a technology for providing a constant gap between the inner circumferential portion and the outer circumferential portion provided separately in the horizontal disc-shaped coil. Hence, Patent Literature 1 described above does not disclose anything about coils wound in any shapes other than the horizontal disc shape.

On the other hand, the conventional induction cooker disclosed by Patent Literature 2 described above is an invention that provides a sandwich configuration as a measure for restraining the horizontal surface of the disc-shaped coil from undergoing wavy deformation and only concerns a measure for restraining a circular coil from undergoing deformation. Therefore, another problem arises in that, in a case where any of a plurality of differently shaped coils each having a concave portion in part of its outer circumference tend to deform in the horizontal direction, such a deformation cannot be suppressed. Hence, if any differently shaped coils are deformed by restoring forces, the differently shaped coils may come into contact with the main coil. In such a case, if high-frequency currents are supplied to the differently shaped coils and the main coil, slight high-frequency vibrations may occur in the individual coils. With such vibrations, the differently shaped coils and the main coil rub together at the contact parts therebetween. Consequently, films provided over the coil wires may peel, leading to problems such as discharge due to short circuits. That is, there is a safety problem.
The present invention is to solve the above problems and to provide a highly safe induction cooker.

### Solution to Problem

An induction cooker according to the present invention includes a main body forming an outer casing, and a top plate provided over an upper portion of the main body and on which a heating object is to be placed. The main body includes a plurality of induction heating units that perform induction heating on the heating object. The induction heating units each include a first coil wound in a disc shape, a plurality of second coils provided around the first coil and each having a concave portion extending along an outer circumference of the first coil in a part of an outer circumference thereof, a coil base on which the first coil and the second coils are provided, and a deformation restraining portion provided on the coil base and restraining the concave portions of the second coils from undergoing deformation. Advantageous Effects of Invention

According to the present invention, a plurality of differently shaped coils provided on a coil base and each having a concave portion on the outer side thereof can be held on the coil base stably and in a uniform state even in case of any deformations in the differently shaped coils. Therefore, even if there are any assembly variations, a highly safe induction cooker is provided.

### Brief Description of Drawings

[Fig. 1] Fig. 1 is a perspective view illustrating an outline of an induction cooker according to any of Embodiments 1 to 3 of the present invention.
[Fig. 2] Fig. 2 is a plan view illustrating a configuration of coils included in the induction cooker according to Embodiment 1 of the present invention.
[Fig. 3] Fig. 3 is a sectional side view illustrating ends of the coils included in the induction cooker according to Embodiment 1 of the present invention.
[Fig. 4] Fig. 4 is a plan view illustrating a configuration of coils included in an induction cooker according to Embodiment 2 of the present invention.
[Fig. 5] Fig. 5 is a sectional side view illustrating a configuration of coils included in an induction cooker according to Embodiment 3 of the present invention. Description of Embodiments

### Embodiment 1

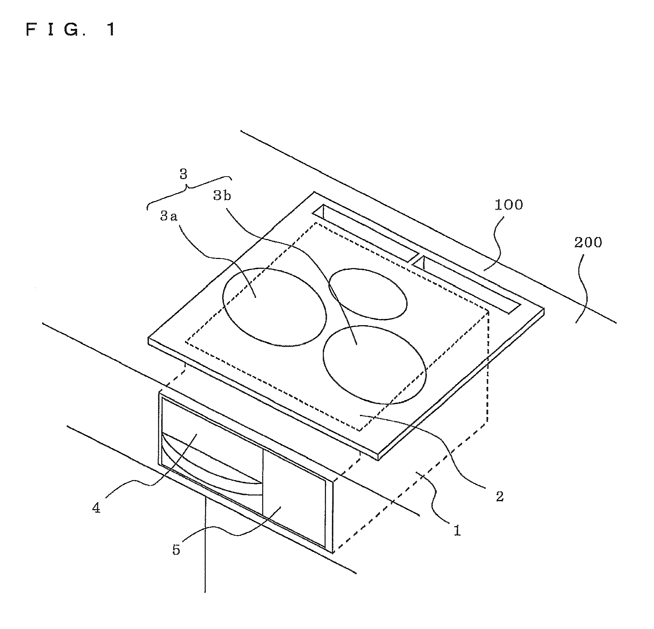

Fig. 1 is a perspective view illustrating an outline of an induction cooker according to Embodiment 1 of the present invention in a state where the induction cooker is installed in a kitchen counter. As illustrated in Fig. 1, an induction cooker 100 includes a main body 1 installed in a kitchen counter 200, and a top plate 2 provided over an upper portion of the main body 1 and on which a heating object, such as a pot, is to be placed. The main body 1 is provided with induction heating units 3a and 3b that are provided on the right and left sides, respectively, and each heat the heating object, and a grill unit 4 having a door at the front. In a state where the induction cooker 100 is installed in the kitchen counter 200, the top surface of the kitchen counter 200 and the upper surface of the top plate 2 are substantially flush with each other. In this state, the grill door and a front design panel 5 of the main body 1 are exposed on the front. Hereinafter, the induction heating units 3a and 3b are collectively denoted as induction heating units 3.

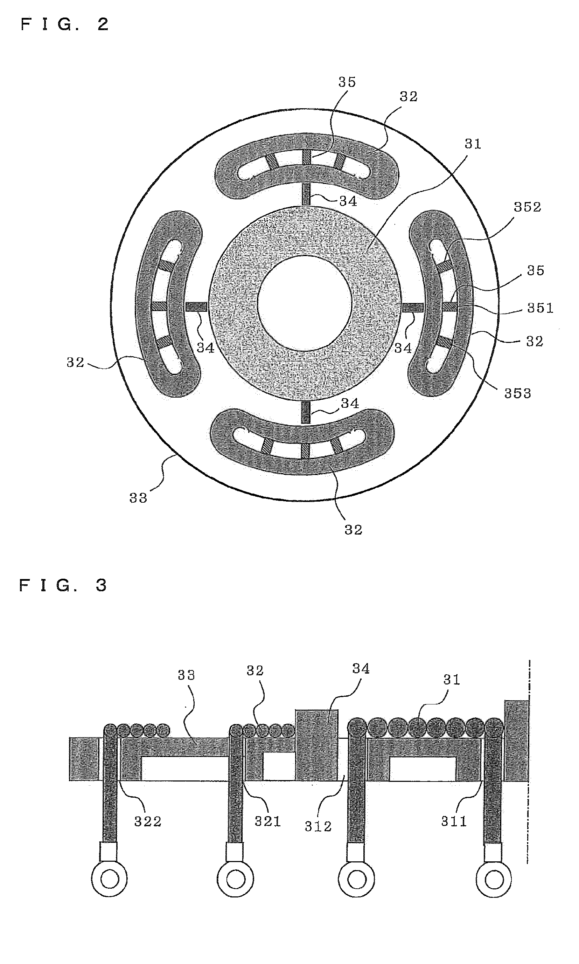

Fig. 2 is a plan view illustrating an outline configuration of coils included in the induction cooker according to Embodiment 1 of the present invention. As illustrated in Fig. 2, each induction heating unit 3 includes a disc-shaped main coil (also referred to as first coil) 31, a plurality of substantially elliptically wound coils (hereinafter referred to as differently shaped coils, or second coils also) 32 provided around the main coil 31 and fixed at a substantially constant predetermined interval (in the example illustrated in Fig. 2, four differently shaped coils 32 are provided point-symmetrically with respect to the center of the main coil), a coil base 33 on which the main coil 31 and the differently shaped coils 32 are provided, deformation restraining portions 34 provided on the coil base 33 and each positioned between the main coil 31 and a corresponding one of the differently shaped coils 32, and deformation restraining portions 35 each provided between a concave portion and a convex portion of a corresponding one of the differently shaped coils 32.
The differently shaped coils 32 are each obtained in the following manner. A coil wire (electric wire) is wound substantially elliptically into a coil; a stress is applied to one longitudinal side of the outer circumference of the coil from the outer circumferential side toward the inner side, whereby the concave portion extending substantially parallel to the outer circumference of the main coil 31 is formed while the convex portion extending substantially parallel to the concave portion is formed on the other longitudinal side of the outer circumference of the coil that is opposite the concave portion.
The deformation restraining portions 35 each include segments that are provided in substantially axial symmetry with respect to a line, as a center axis, connecting the center of the concave portion and the center of the convex portion of each of the second coils. The deformation restraining portions 35 include a deformation restraining segment 351 provided on the center axis, and deformation restraining segments 352 and 353 provided in axial symmetry with respect to the deformation restraining segment 351 as the center axis.
In Fig. 2, four differently shaped coils 32 are provided and are denoted by reference numerals 32a to 32d, respectively.
Likewise, four deformation restraining portions 34 are provided and are denoted by reference numerals 34a to 34d (not illustrated), respectively.
Likewise, four deformation restraining portions 35 are provided and are denoted by reference numerals 35a to 35d (not illustrated), respectively.
Likewise, four deformation restraining segments 351 are provided and are denoted by reference numerals 351 a to 351 d (not illustrated), respectively.
Likewise, four deformation restraining segments 352 are provided and are denoted by reference numerals 352a to 352d (not illustrated), respectively.
Likewise, four deformation restraining segments 353 are provided and are denoted by reference numerals 353a to 353d (not illustrated), respectively.

Fig. 3 is a sectional side view illustrating ends of the coils included in the induction cooker according to Embodiment 1 of the present invention.
As illustrated in Fig. 3, terminals at two ends of the main coil 31 reside below the coil base 33, and the main coil 31 resides below the coil base 33. That is, in fabricating the coil, an electric wire is made to pass through a hole 311 provided in the coil base 33 from below the coil base 33 and starts to be wound around a reel provided in the center. The winding-terminal end of the electric wire is then made to pass through a hole 312 provided in the coil base 33. Subsequently, the two ends of the electric wire are caulked, whereby terminals are provided.
In a case of the differently shaped coil 32, an electric wire is made to pass through a hole 321 provided in the coil base 33 from below the coil base 33 and starts to be wound while stresses are applied thereto with a corresponding one of the deformation restraining portions 34 and a corresponding one of the deformation restraining portions 35. The winding-terminal end of the electric wire is then made to pass through another hole 322 provided in the coil base 33. Subsequently, the two ends of the electric wire are caulked, whereby terminals are provided.

Each of the deformation restraining portions 34 provided between the main coil 31 and a corresponding one of the differently shaped coils 32 obtained as described above is in contact with the differently shaped coil 32 at least at one point on an outer circumferential side of the differently shaped coil 32 on which the concave portion is provided.
The deformation restraining portion 35 provided on the inner side of each differently shaped coil 32, specifically, the deformation restraining segment 352 and the deformation restraining segment 353, are each in contact with at least at one point on an inner circumferential side of the differently shaped coil 32 on which the concave portion is provided.
That is, the deformation restraining portions are provided in such a manner as to be in contact with each of the differently shaped coil 32 at least at a total of three points: one point on the outer circumferential side having the concave portion and two points on the inner circumferential side near the respective ends of the concave portion. Thus, the deformation that may be caused by the restoring force acting on the concave portion is suppressed.

Hence, according to Embodiment 1, a plurality of differently shaped coils arranged on a coil base and each having a concave portion on the outer side thereof can be held on the coil base stably and in a uniform state even in case of any deformations in the differently shaped coils. Therefore, even if there are any assembly variations, a highly safe induction cooker is provided.

Furthermore, according to the present invention in which the plurality of differently shaped coils each having the concave portion are held on the coil base, the deformation restraining portions are provided at such positions as to restrain any deformation of each differently shaped coil that may occur when the concave portion tends to deform linearly under a restoring force. Therefore, the occurrence of such deformation is suppressed, and the plurality of coils are retained at a constant distance from one another. Moreover, for example, the occurrence of nonuniformity in heating caused by such deformation is also suppressed.

Particularly, since the deformation restraining portions are provided on the outer circumferences of the coils, the occurrence of protrusion of any coil wires from the coil base is suppressed. Consequently, for example, the influence of a magnetic field produced when the coils are energized upon components provided around the coil base is reduced.

Furthermore, since the deformation restraining portions are provided on the inner circumferential side of the coils, not only any deformations on the outer circumferences of the differently shaped coils but also any deformations on the inner circumferences of the differently shaped coils are suppressed. Therefore, nonuniformity in heating is stabilized.

Furthermore, in the induction cooker including thereinside the coil base that holds a plurality of coils, the coils are arranged such that the winding-starting ends of the electric wires forming the coils all extend through the respective holes provided in the coil base. Hence, the winding-staring ends of the electric wires forming the coils can be drawn and connected to the outside by drawing the coil wires in a direction perpendicular to the coil surfaces, not by drawing the electric wires along the undersides of the coils to the outside. Therefore, coils having less deformation and small variations are obtained.

### Embodiment 2

Fig. 1 is also referred to in Embodiment 2.

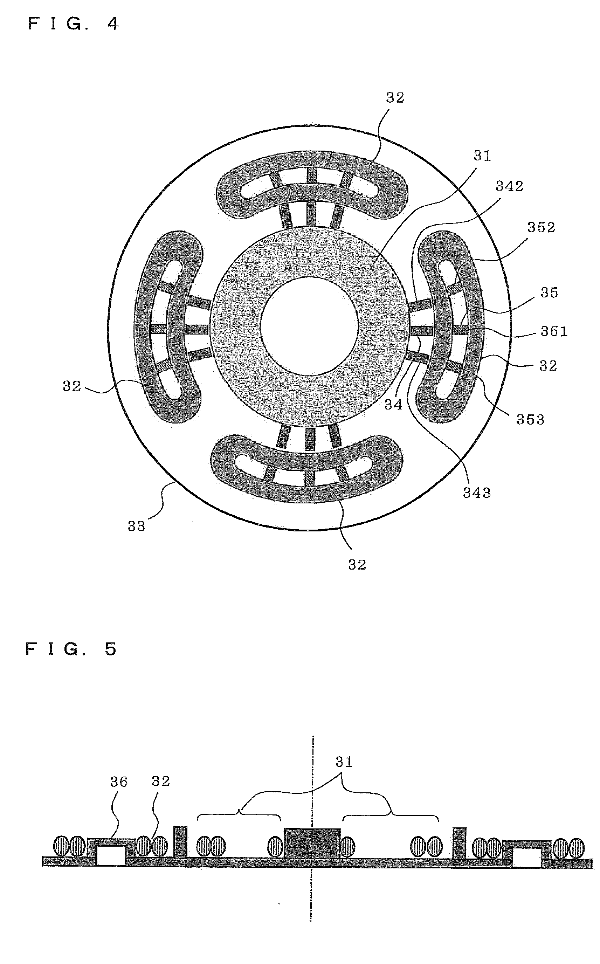

Fig. 4 is a plan view illustrating a configuration of coils included in an induction cooker according to Embodiment 2 of the present invention.
The configuration illustrated in Fig. 4 is the same as the configuration illustrated in Fig. 2, except the configuration of the deformation restraining portions 34.
Deformation restraining portions 34 each include a deformation restraining segment 341 separating a part of the concave portion of each differently shaped coil 32 that corresponds to the deformation restraining segment 351 and the main coil 31 from each other, a deformation restraining segment 342 separating a part of the concave portion of the differently shaped coil 32 that corresponds to the deformation restraining segment 352 and the main coil 31 from each other, and a deformation restraining segment 343 separating a part of the concave portion of the differently shaped coil 32 that corresponds to the deformation restraining segment 353 and the main coil 31 from each other.
In Fig. 4, four deformation restraining segments 341 are provided and are denoted by reference numerals 341 a to 341 d, respectively. The deformation restraining segments 341 a to 341 d correspond to the deformation restraining portions 34a to 34d, respectively, according to Embodiment 1.
Likewise, four deformation restraining segments 342 are provided and are denoted by reference numerals 342a to 342d, respectively.
Likewise, four deformation restraining segments 343 are provided and are denoted by reference numerals 343a to 343d, respectively.

According to Embodiment 2, the following advantageous effect is produced in addition to the advantageous effects produced in Embodiment 1. Since the force of restraining deformation of the differently shaped coils is further increased, the deformation can be maintained for a long time.

### Embodiment 3

Fig. 1 is also referred to in Embodiment 3.
Fig. 5 is a sectional side view illustrating a configuration of coils included in an induction cooker according to Embodiment 3 of the present invention.
As illustrated in Fig. 5, the deformation restraining portions 35 according to Embodiment 1 or 2 are not provided. Instead, the coil base 33 is drawn in such a manner as to have deformation restraining portions 36 on the inner side of the respective differently shaped coils according to Embodiment 1 or 2. The deformation restraining portions 36 are formed as projecting portions each extending parallel to the outer circumference of the main coil 31. The deformation restraining portions 36 may each extend continuously over the entire area on the inner side of a corresponding one of the differently shaped coils, or may each be provided discontinuously.

According to Embodiment 3, the following advantageous effect is produced in addition to the advantageous effects produced in Embodiment 1. Since the deformations of the differently shaped coils are each generally restrained further on the inner side thereof, the restoring force acting on the convex portion does not push back the concave portion. Thus, the effect of suppressing the restoring force is further enhanced.

### Industrial Applicability

The induction cooker according to the present invention is applicable to a wide range of industries concerning the manufacture, sales, and use of cookers. Reference Signs List

1 main body; 2 top plate; 3, 3a to b induction heating unit; 4 grill unit; 5 front design panel; 31 main coil (first coil); 32 differently shaped coil (second coil); 33 coil base; 34, 34a to d deformation restraining portion; 35, 35a to d deformation restraining portion; 36 deformation restraining portion; 100 induction cooker; 200 kitchen counter; 311 hole; 312 hole; 321 hole; 322 hole; 341, 341 a to d deformation restraining segment; 342, 342a to d deformation restraining segment; 43, 343a to d deformation restraining segment; 351, 351 a to d deformation restraining segment; 352, 352a to d deformation restraining segment; 353, 353a to d deformation restraining segment;

## Claims

1. An induction cooker comprising:
a main body forming an outer casing; and
a top plate provided over an upper portion of the main body and on which a heating object is to be placed,
wherein the main body includes an induction heating unit that performs induction heating on the heating object, and
wherein the induction heating unit includes
a first coil wound in a disc shape;
a plurality of second coils provided around the first coil and each having, in a part of an outer circumference thereof, a concave portion extending along an outer circumference of the first coil;
a coil base on which the first coil and the second coils are provided; and
a deformation restraining portion provided on the coil base and restraining the concave portions of the second coils from undergoing deformation.

2. The induction cooker of claim 1, wherein the second coils each have a convex portion provided on an outer peripheral side thereof opposite the concave portion, the convex portion extending substantially parallel to the concave portion.

3. The induction cooker of claim 1 or 2, wherein the deformation restraining portion includes a first deformation restraining segment that is provided between the first coil and the second coils, and at least one end of the first deformation restraining segment is in contact with an outer peripheral side of the concave portion of each of the second coils.

4. The induction cooker of claim 1 or 2, wherein the deformation restraining portion includes a second deformation restraining segment that is provided between the concave portion and the convex portion of each of the second coils, and at least one end of the second deformation restraining segment is in contact with an inner peripheral side of the concave portion of the second coil.

5. The induction cooker of claim 3 or 4, wherein the deformation restraining portion includes segments that are provided in substantially axial symmetry with respect to a line, as a center axis, connecting a center of the concave portion and a center of the convex portion of each of the second coils.

6. The induction cooker of claim 3 or 4, wherein the deformation restraining portion includes segments that are provided on a line, as a center axis, connecting a center of the concave portion and a center of the convex portion of each of the second coils.

7. The induction cooker of claim 4,
wherein the second deformation restraining segment is a projecting portion that is provided by drawing the coil base in such a manner as to extend parallel to the outer circumference of the first coil, and
wherein the second coils are each wound around the projecting portion.
